# EUROPÄISCHE PATENTSCHRIFT

(11) **EP 2 757 400 B1**
(45) Veröffentlichungstag und Bekanntmachung des Hinweises auf die Patenterteilung: **02.08.2017**
(21) Anmeldenummer: 13005334.1
(22) Anmeldetag: 13.11.2013
(51) Int. Cl.: G02B 6/44, H04Q 1/14

(54) **Glasfaser-Abschlusspunkt**
Optical glass fiber termination point
Terminaison de fibres optiques en verre

(30) Priorität: 18.01.2013 DE 102013000910
(43) Veröffentlichungstag der Anmeldung: 23.07.2014
(73) Patentinhaber: Langmatz GmbH, 82467 Garmisch-Partenkirchen (DE)
(72) Erfinder: Resch, Hans-Jörg, 82491 Grainau (DE)
(74) Vertreter: Flosdorff, Jürgen

(56) Entgegenhaltungen:
- EP-A1- 0 531 628
- EP-A1- 2 141 528
- WO-A1-2009/031172
- WO-A2-2012/074688

## Beschreibung

Die Erfindung betrifft einen Glasfaser-Abschlusspunkt, der ein Gehäuse mit einem verschließbaren Deckel aufweist, wobei in dem Gehäuse eine Glasfaser-Kassette zum Spleißen von in das Gehäuse eingeführten Glasfasern und eine Montageplatte zum Verteilen der Glasfaser angeordnet sind. Die gespleißten und verteilten Glasfasern werden schließlich aus dem Gehäuse ausgeführt und verlaufen zu ihrem jeweiligen Bestimmungsort in einem Gebäude. Das Gehäuse des Glasfaser-Abschlusspunktes ist üblicherweise an einer Wand des Gebäudes befestigt.

Die Glasfasern können entweder zur Festverkabelung aus dem Gehäuse austreten, oder die auf der Montageplatte verteilten Glasfasern führen zu Buchsen, in die mit Steckern versehene anschließende Glasfasern zur Steckerverkabelung einsteckbar sind. Bisher sind für diese beiden verschiedenen Arten der Weiterführung der Glasfasern unterschiedliche Glasfaser-Abschluss-punkte vorgesehen.

Ein weiteres Problem kann bei herkömmlichen Glasfaser-Abschlusspunkten darin bestehen, dass nicht immer genügend Freiraum unter dem Gehäuse an einer zu dessen Befestigung vorgesehenen Stelle zur Verfügung steht. Das Problem wird bisher dadurch gelöst, dass das Gehäuse an einer anderen Stelle der Wand angebracht wird, die an sich hierzu nicht besonders geeignet erscheint.

Die WO2012/074 688 A2 offenbart einen Glasfaser-Abschlusspunkt mit einem Gehäuse, Glasfaser-Kassetten und mit einer Montageplatte zum Verteilen der Glasfaser. Die Montageplatte enthält vier Öffnungen in zwei einander gegenüber liegenden Seitenwänden, von denen zwei einander gegenüber liegende Öffnungen vermutlich für eine Faserdurchführung und zwei weitere einander gegenüber liegende Öffnungen vermutlich für eine Kabeldurchführung ohne Steckeranschluss genutzt werden. Außerdem enthält die Druckschrift die Angabe, dass die Montageplatte in dem Gehäuse an verschiedenen Positionen befestigt sein kann, beispielsweise nahe der linken Seitenwand, nahe der rechten Seitenwand, nahe der oberen Seitenwand oder mittig auf der Grundplatte, um für die Installation eine größere Flexibilität zu bieten. Die Montageplatte kann zu demselben Zweck auch in zueinander gedrehter Ausrichtung befestigt werden.

Die EP 2 141 528 A1 offenbart einen Glasfaser-Abschlusspunkt mit einer ersten Schicht, einer darüber angeordneten zweiten Schicht und einer Deckelschicht, die die zweite Schicht überdecken kann und deren Inhalt schützt. Die erste Schicht enthält an einer Seite eine Kabeleinlassöffnung und zwei gegenüber liegende Auslassöffnungen. Die Ausgänge sind für die Festverkabelung vorgesehen. Die erste Schicht enthält außerdem einen Faserkanal, durch den Glasfasern zu der darüber angeordneten zweiten Schicht geführt werden, um durch Kanäle in die zweite Schicht einzutreten, wobei in jeder Seitenwand der Schicht ein solcher Kanal vorgesehen ist. Die zweite Schicht enthält in einem Randbereich einen Ausgang für eine Steckerverkabelung. Die beiden Schichten sind in zueinander gedrehten Ausrichtungen aneinander befestigbar. Demnach ist an einem Randbereich der zweiten Schicht ein Ausgang für die Steckerverkabelung vorgesehen, während der Ausgang für die Festverkabelung an der darunter liegenden ersten Schicht ausgebildet ist.

Der vorliegenden Erfindung liegt die Aufgabe zugrunde, einen Glasfaser-Abschlusspunkt anzugeben, bei dem weiter oben aufgeführten Nachteile vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Montageplatte im wesentlichen eine quadratische Grundrissform hat und in einem Bereich einen Ausgang für Glasfaserkabel zur Festverkabelung und in einem anderen Bereich einen Ausgang zur Steckerverkabelung der Glasfaser aufweist, so dass die Montageplatte für beide Arten der Weiterführung der Kabel verwendbar ist. Weiter sieht die Erfindung vor, dass die Montageplatte und das Gehäuse zusammenwirkende Befestigungsmittel aufweisen, die sich an solchen Stellen befinden, dass die Montageplatte in wenigstens zwei zueinander gedrehten Ausrichtungen an der Rückwand des Gehäuses befestigbar ist. Damit kann der gewünschte Kabelausgang in beiden Fällen an derselben Stelle in dem Gehäuse platziert werden, so dass die Kabel - entweder durchgehend zur Festverkabelung oder über Steckerverbindung - an derselben Stelle aus dem Gehäuse austreten können. Wenn an der üblicherweise vorgesehenen Austrittsseite am unteren Rand des Gehäuses nicht der erforderliche Freiraum zur Verfügung steht, kann der ausgewählte Ausgang durch gedrehte Befestigung der Montageplatte an einer der beiden Längsseiten des Gehäuses angeordnet werden, so dass die Kabel an der rechten oder linken Seite des Gehäuses austreten können, wobei hierfür entsprechende Öffnungen an dem Gehäuse vorgesehen sein sollten.

In einer bevorzugten Ausführungsform liegen die beiden Randbereiche mit den Ausgängen in einem Winkel von etwa 90° zueinander, und die Montageplatte ist wenigstens in zwei Ausrichtungen in dem Gehäuse zu befestigen, die um etwa 90° zueinander gedreht sind. Damit können wahlweise die Kabel für die Festverkabelung und die Kabel mit Steckerverbindung an derselben Stelle des Gehäuses austreten.

Die beiden Randbereiche mit den Ausgängen können auch diametral gegenüber liegen, und die wenigstens zwei Ausrichtungen der Montageplatte können um etwa 180° zueinander gedreht sein.

Bevorzugt ist, dass die Montageplatte in mehr als zwei Ausrichtungen, am meisten bevorzugt in vier Ausrichtungen befestigbar ist.

Weiter wird vorgeschlagen, dass die Befestigungsmittel der Montageplatte und des Gehäuses an Stellen ausgebildet sind, die die Eckpunkte eines gedachten Quadrats bilden. In diesem Fall kann die Montageplatte in vier um jeweils 90° gedrehten Anordnungen fixiert werden.

Als Befestigungsmittel können Spreizdorne vorgesehen sein, die in Bohrungen des anderen Bauteils in einen Klemmsitz einsteckbar sind. Es kommen auch andere Befestigungsmittel in Betracht, beispielsweise Vorsprünge mit Rastnasen, die in Bohrungen einrasten.

Bevorzugt sind an der Montageplatte vier Spreizdorne ausgebildet, die in Bohrungen in dem Gehäuse einsteckbar sind. Die Montageplatte hat im wesentlichen vorzugsweise eine quadratische Form, an deren Ecken sich die Spreizdorne befinden. Die Anordnung von Spreizdornen und Bohrungen kann auch umgekehrt getroffen werden.

Der Ausgang für die Festverkabelung enthält bevorzugt Klemmmittel für die Glasfasern und am Rand der Montageplatte einen Steg mit Einbuchtungen, durch die die Glasfasern hindurchgeführt werden. Die Glasfasern, die eine Umhüllung und eine Aramidfaser aufweisen, werden auf gekrümmten Bahnen unter Laschen hindurch geführt, wodurch die Glasfasern an ihrem Ausgang fixiert sind.

An dem Ausgang für die Steckerverkabelung sind bevorzugt in einem Randsteg Aufnahmen für Buchsen ausgebildet, an denen die ebenfalls auf gekrümmten Bahnen zugeführten Glasfaserkabel befestigt werden. Bei dem Buchsen handelt es sich bevorzugt um sechs Doppel-LC-Buchsen, in die von außen zwölf LC-Stecker mit weiterführenden Glasfaserkabeln einsteckbar sind.

Weiter ist mit großem Vorteil vorgesehen, dass der Gehäusedeckel einen vorzugsweise nicht verschlossenen kleinen Deckel aufweist, durch den ein Randbereich der Montageplatte zugänglich ist. Der Bereich unter dem kleinen Deckel ist damit für den Kunden zugänglich, der nicht die Möglichkeit hat, den beispielsweise durch eine Sonderschraube oder durch eine Plombe verschlossenen Gehäusedeckel zu öffnen. Der kleine Deckel ist beispielsweise aufklappbar oder abnehmbar angeordnet.

Der auf diese Weise zugängliche Bereich des Gehäuses befindet sich dort, wo normalerweise der ausgewählte Ausgang für die Glasfaserkabel platziert ist, d.h. im unteren Bereich des rechteckigen Deckels, der an den Bereich der Montageplatte anschließt. Der Kunde kann hier die von dem Glasfaser-Abschlusspunkt ausgehenden Kabel handhaben, während er zu dem darüber liegenden Kabelmanagementbereich keinen Zugang hat.

Das Gehäuse hat in seiner unteren Umfangswand Austrittsöffnungen für die Glasfaserkabel. Weitere Austrittsöffnungen befinden sich zweckmäßigerweise auch in den seitlichen Umfangswänden, so dass Glasfasern an drei Seiten aus dem Gehäuse austreten können. Hierdurch sind räumliche Beschränkungen des Einbauortes des Glasfaser-Abschlusspunktes vermieden.

Weitere Einzelheiten der Erfindung ergeben sich aus der nachfolgenden Beschreibung einer bevorzugten Ausführungsform der Erfindung sowie anhand der Zeichnungen. Dabei zeigen:

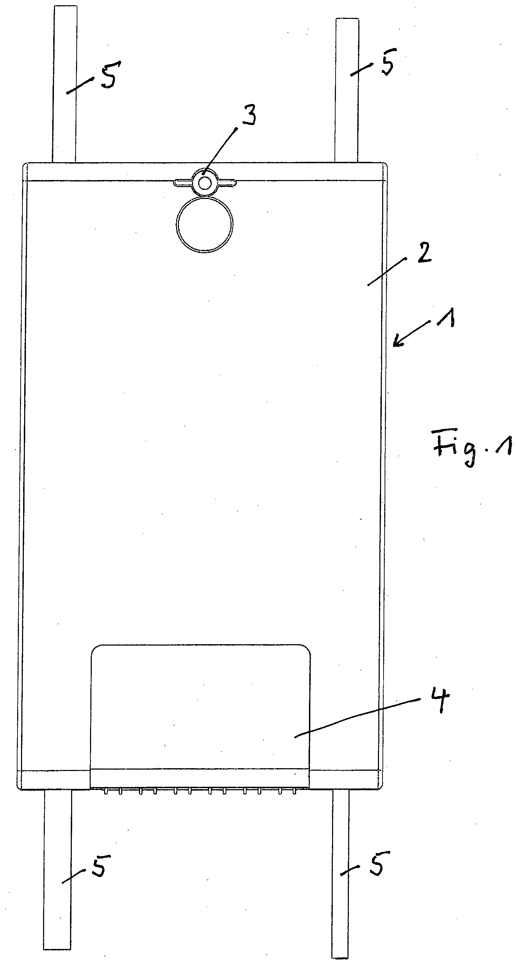

- Figur 1: das Gehäuse eines Glasfaser-Abschlusspunktes im geschlossenen Zustand;
- Figur 2: das Gehäuse gemäß Figur 1 mit geöffnetem Kundendeckel;
- Figur 3: das Gehäuse im geöffneten Zustand;
- Figur 4: das Gehäuse im offenen Zustand ohne Glasfaser-Kassette;
- Figur 5: die Montageplatte mit der Glasfaser-Kassette;
- Figur 6: die Montageplatte;

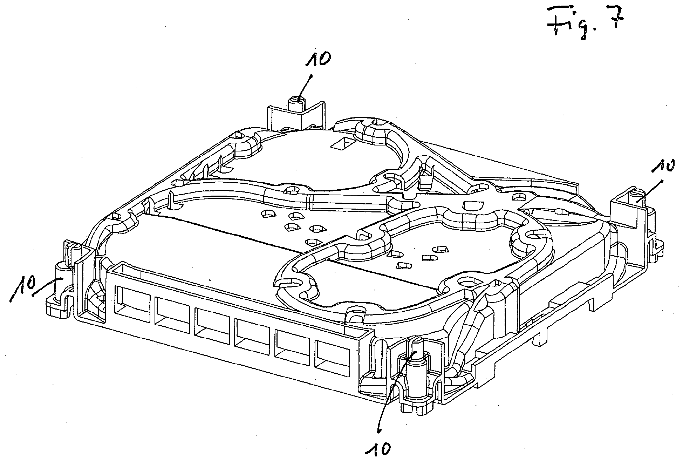

- Figur 7: die Montageplatte von unten;
- Figur 8: ein vergrößertes Detail der Befestigungsmittel der Montageplatte an der Gehäuserückwand;
- Figur 9: drei Gehäuse mit drei verschiedenen Ausgangsmöglichkeiten mit LC-Steckern und
- Figur 10: dieselbe Anordnung wie Figur 9 mit drei Möglichkeiten für die Festverkabelung.

Das Gehäuse 1 des Glasfaser-Abschlusspunktes hat eine langgestreckte Rechteckform und wird in der Regel in der dargestellten Ausrichtung an der Wand eines Gebäudes befestigt. Das Gehäuse 1 hat einen Gehäusedeckel 2, der mit einer Sonderschraube 3 verschließbar ist, so dass der Deckel 2 nur von einem hierzu befugten Monteur abnehmbar ist. Im unteren Randbereich ist in den Gehäusedeckel 2 ein kleiner Deckel 4 eingesetzt, der von Nutzern abgenommen werden kann, um Zugang zu dem darunter liegenden Bereich in dem Gehäuse 1 zu erlangen. In das Gehäuse 1 führen vier Zugangsrohre 5, durch die eine Vielzahl von Glasfasern in das Gehäuse 1 einführbar sind.

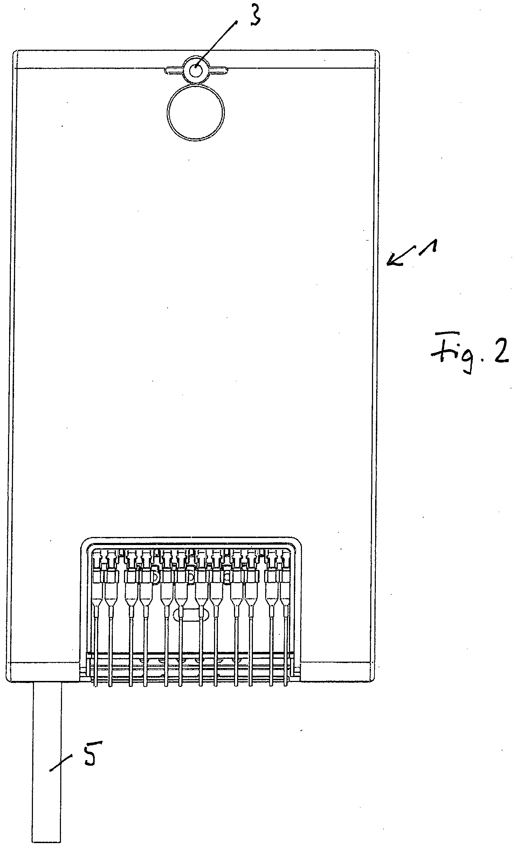

Figur 2 zeigt den Bereich, in dem die einzelnen in dem Gehäuse 1 verteilten Glasfasern über Steckerverbindung aus dem Gehäuse 1 ausgeführt werden.

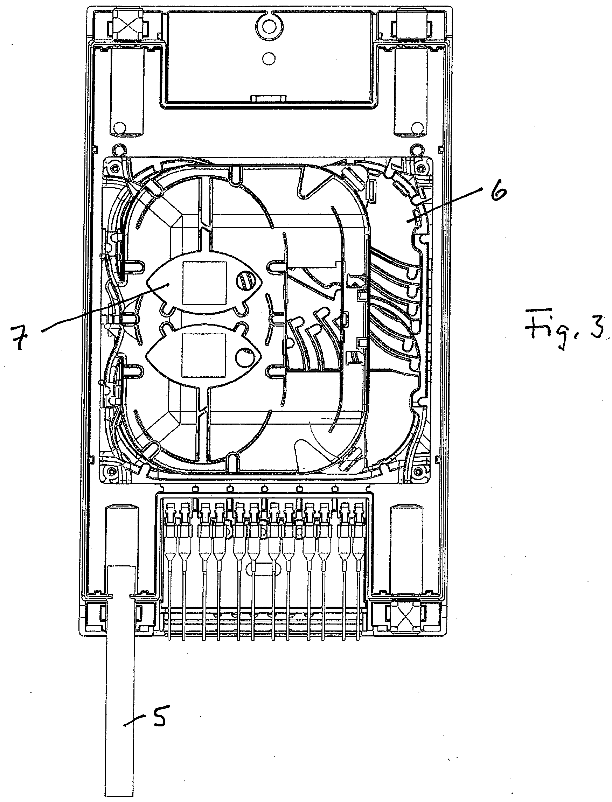

Figur 3 zeigt, dass in dem Gehäuse 1 eine Montageplatte 6 und eine Glasfaser-Kassette 7 angeordnet sind, die über eine Schnapphalterung schwenkbar an der Montageplatte 6 befestigt ist. Die Glasfaser-Kassette 7 ist zum Spleißen von Glasfasern vorgesehen, die auf der dahinter angeordneten Montageplatte 6 verteilt werden.

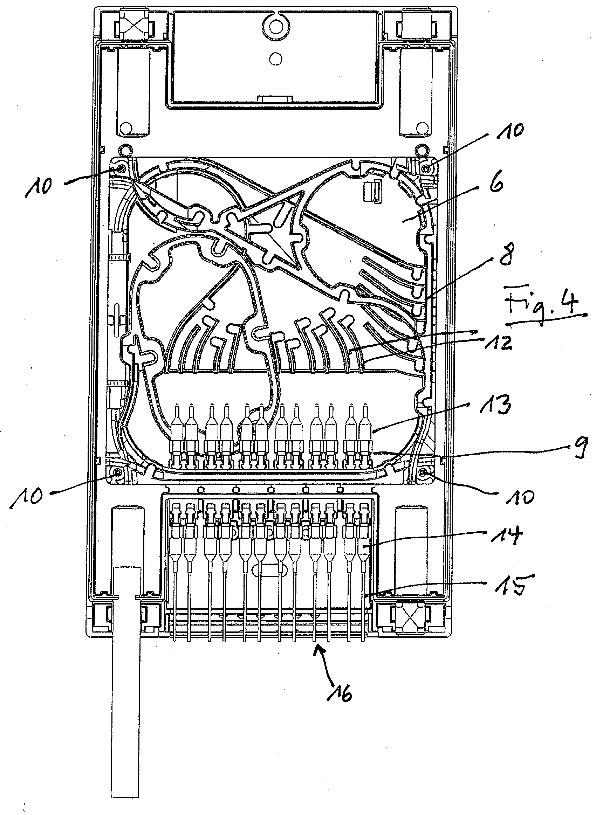

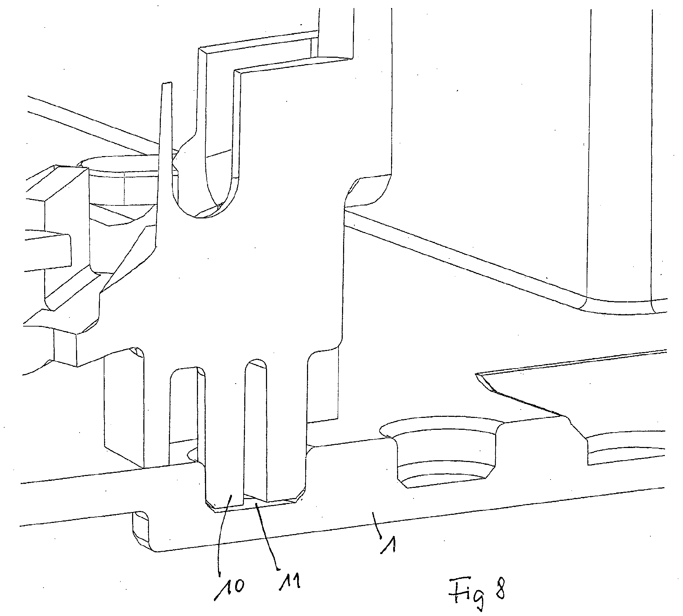

In Figur 4 ist die Glasfaser-Kassette 7 entfernt, so dass zu sehen ist, dass die Montageplatte 6 im wesentlichen eine quadratische Grundrissform hat. An dem in der Figur rechten Randbereich befindet sich ein Ausgang 8 zur Festverkabelung der abgehenden Glasfasern, und an dem angrenzenden unteren Randbereich ist ein Ausgang 9 für eine Steckerverkabelung der abgehenden Glasfaser vorgesehen. An den Eckbereichen der quadratischen Montageplatte 6 befinden sich Befestigungsmittel in Form von Spreizdornen 10, die in zugehörige Bohrungen 11 in der Rückwand des Gehäuses 1 in einen Klemmsitz einsteckbar sind (Figur 8). Die Montageplatte 6 kann daher in vier jeweils um 90° gedrehten Ausrichtungen in dem Gehäuse 1 befestigt werden.

Bei der Anordnung gemäß Figur 4 werden die verteilten Glasfasern dem Ausgang 9 entlang gebogener Führungen 12 zugeführt und dort mit LC-Buchsen 13 verbunden, in die LC-Stecker 14 einsteckbar sind, die mit Glasfasern 15 versehen sind, die am unteren Rand 16 aus dem Gehäuse 1 austreten.

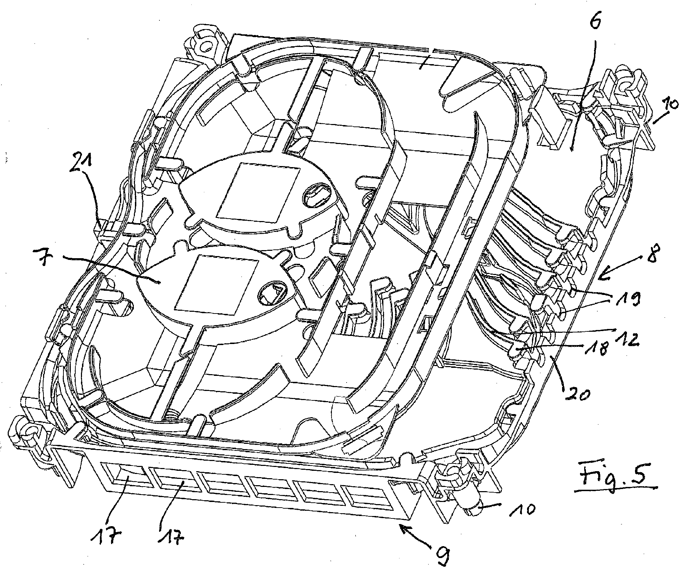

Figur 5 zeigt am Ausgang 9 Aussparungen 17, in die die LC-Buchsen 13 einsetzbar sind.

Zu dem Ausgang 8 für die Festverkabelung erstrecken sich ebenfalls gebogene Führungsbahnen 12 für Glasfaserkabeln, die jeweils unter eine Lasche 18 hindurchgeführt und mittels Klemmschrauben darunter eingeklemmt werden, bevor sie durch Einbuchtungen 19 in einem Randsteg 20 der Montageplatte 6 weiter geleitet werden. Die Glasfaser-Kassette 7 ist mittels einer Schnapphalterung 21 an dem gegenüber liegenden Randbereich der Montageplatte 6 schwenkbar befestigt.

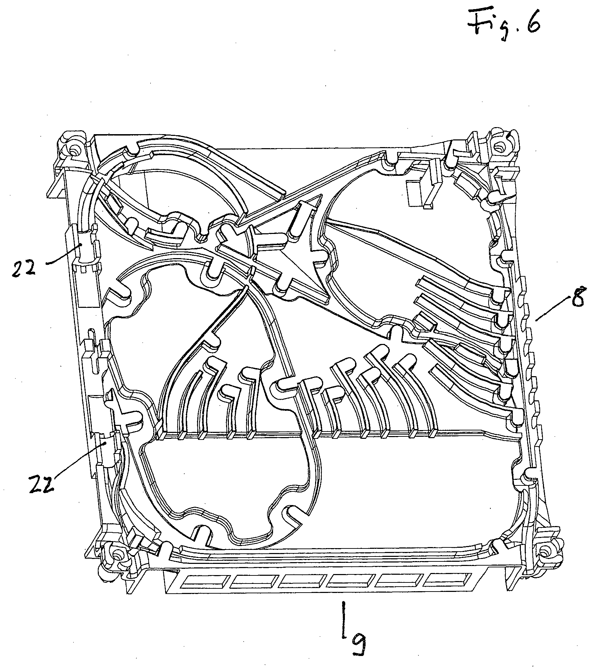

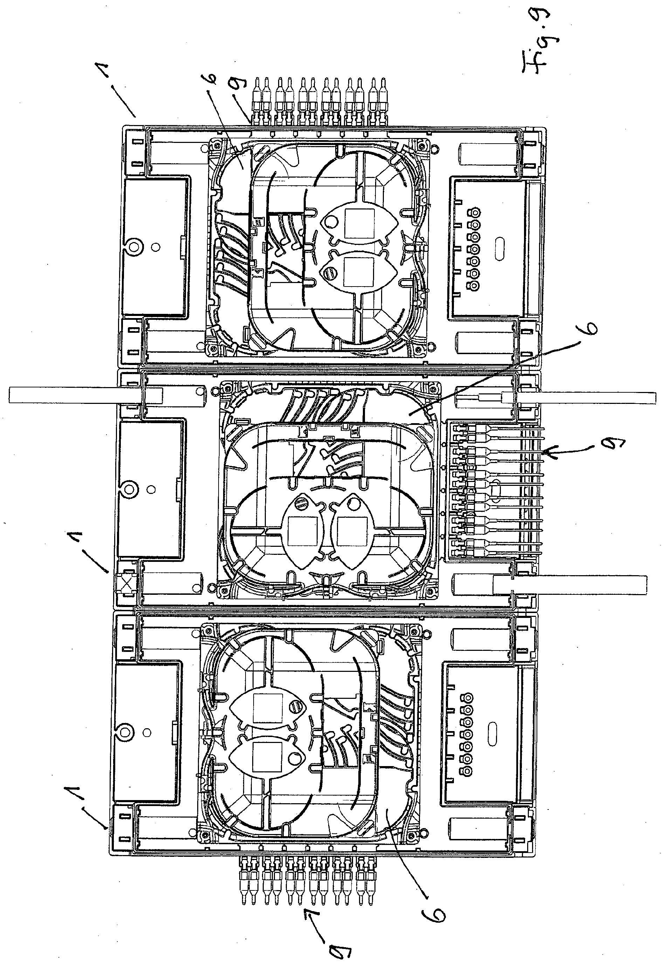

Figur 6 zeigt scharnierartige Lager 22 für die Glasfaser-Kassette mit einer Rastung in drei Stufen von jeweils 45°. In Figur 9 sind drei Gehäuse 1 nebeneinander angeordnet, wobei sie mit ihren Längsseiten aneinander anliegen. Die Montageplatten 6 sind jeweils um 90° gedreht zueinander an der Rückwand der Gehäuse 1 befestigt, so dass sich die Ausgänge 9 für die Steckerverbindung (in der Darstellung von links nach rechts) an der linken freien Längsseite, an der Unterseite und an der rechten freien Längsseite der jeweiligen Gehäuse 1 befinden.

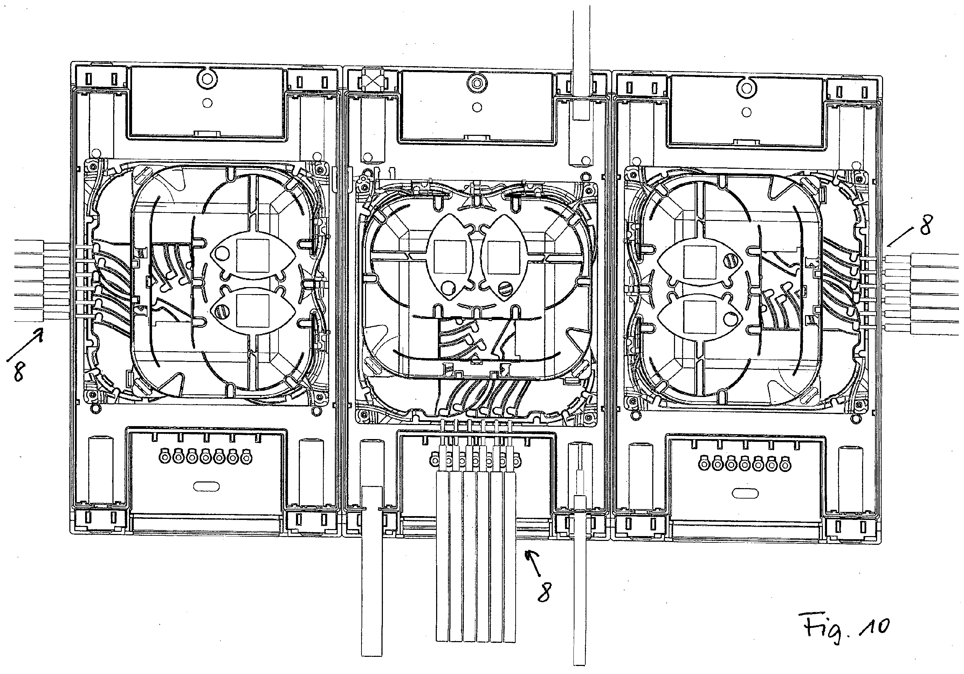

Figur 10 zeigt eine entsprechende Anordnung für die Festverkabelung der abgehenden Glasfasern, wobei die Montageplatten 6 jeweils um 90° gegenüber der Darstellung in Figur 9 gedreht angeordnet sind.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Glasfaser-Abschlusspunkt mit einem rechteckigen Gehäuse (1) mit verschließbarem Deckel (4), in dem eine Glasfaser-Kassette (7) zum Spleißen von in das Gehäuse (1) eingeführten Glasfasern und eine Montageplatte (6) zum Verteilen der Glasfasern angeordnet sind, wobei die Glasfaser-Kassette (7) an der Montageplatte (6) befestigt ist und wobei das Gehäuse (1) an wenigstens einer Seite Austrittsöffnungen für Glasfaser-Kabel aufweist, wobei die Montageplatte (6) im wesentlichen eine quadratische Grundrissform hat und an einem Randbereich einen Ausgang (8) für Glasfaser-Kabel zur Festverkabelung und an einem anderen Randbereich einen Ausgang (9) zur Steckerverkabelung mit Aufnahmen (17) für Buchsen (13) der Glasfasern aufweist und
die Montageplatte (6) und das Gehäuse (1) zusammenwirkende Befestigungsmittel (10,11) aufweisen, mit denen die Montageplatte (6) in wenigstens zwei zueinander gedrehten Ausrichtungen in dem Gehäuse (1) befestigbar ist, derart, dass entweder der Ausgang (8) zur Festverkabelung oder der Ausgang (9) zur Steckerverkabelung an der wenigstens einen Seite mit den Austrittsöffnungen des Gehäuses (1) platziert ist.

2. Glasfaser-Abschlusspunkt nach Anspruch 1,
**dadurch gekennzeichnet,**
**dass** die beiden Randbereiche in einem Winkel von etwa 90° zueinander liegen und
**dass** die wenigstens zwei Ausrichtungen der Montageplatte (6) um etwa 90° zueinander gedreht sind.

3. Glasfaser-Abschlusspunkt nach Anspruch 1,
**dadurch gekennzeichnet,**
**dass** die beiden Randbereiche diametral gegenüber liegen und dass die wenigstens zwei Ausrichtungen der Montageplatte um etwa 180° zueinander gedreht sind.

4. Glasfaser-Abschlusspunkt nach den Ansprüchen 1 bis 3,
**dadurch gekennzeichnet,**
**dass** die Befestigungsmittel (10,11) der Montageplatte (6) und des Gehäuses (1) an Stellen ausgebildet sind, die die Eckpunkte eines Quadrats bilden.

5. Glasfaser-Abschlusspunkt nach den Ansprüchen 1 bis 4,
**dadurch gekennzeichnet,**
**dass** an der Montageplatte (6) vorzugsweise vier Spreizdorne (10) ausgebildet sind, die in Bohrungen (11) in dem Gehäuse (1) in einen Klemmsitz einsteckbar sind.

6. Glasfaser-Abschlusspunkt nach den Ansprüchen 1 bis 5,
**dadurch gekennzeichnet,**
**dass** der Ausgang (8) für die Festverkabelung Klemmmittel (18) und Einbuchtungen (19) in einem Randsteg (20) zum Durchführen der Glasfasern aufweist.

7. Glasfaser-Abschlusspunkt nach den Ansprüchen 1 bis 6,
**dadurch gekennzeichnet,**
**dass** der Gehäusedeckel (2) einen zu öffnenden kleinen Deckel (4) aufweist, durch den ein Randbereich der Montageplatte (6) zugänglich ist.

8. Glasfaser-Abschlusspunkt nach Anspruch 7, **dadurch gekennzeichnet,**
**dass** das Gehäuse (1) im Bereich des kleinen Deckels (4) Austrittsöffnungen für Glasfaser-Kabel aufweist.

9. Glasfaser-Abschlusspunkt nach den Ansprüchen 1 bis 8,
**dadurch gekennzeichnet,**
**dass** das Gehäuse (1) eine Rechteckform hat und dass sich an drei Seiten Austrittsöffnungen für Glasfaser-Kabel befinden.

## Claims

1. An optical glass fibre termination point with a rectangular housing (1) with a closable lid (4), in which an optical glass fibre cassette (7) for splicing optical glass fibres introduced into the housing (1) and a mounting plate (6) for distributing the optical glass fibres are arranged, wherein the optical glass fibre cassette (7) is fastened to the mounting plate (6) and wherein the housing (1) has outlet openings for optical glass fibre cables on at least one side, wherein the mounting plate (6) has a substantially square outline shape and at one edge region has an outlet (8) for optical glass fibre cables to the hard wiring and at another edge region an outlet (9) to the plug wiring with mounts (17) for connectors (13) of the optical glass fibres and the mounting plate (6) and the housing (1) have cooperating fastening means (10, 11), with which the mounting plate (6) is fastenable in the housing (1) in at least two orientations rotated with respect to one another such that either the outlet (8) to the hard wiring or the outlet (9) to the plug wiring is positioned at the at least one side with the outlet openings in the housing (1).

2. An optical glass fibre termination point as claimed in Claim 1, **characterised in that** the two edge regions are situated at an angle of about 90° to one another and that the at least two orientations of the mounting plate (6) are rotated through about 90° with respect to one another.

3. An optical glass fibre termination point as claimed in Claim 1, **characterised in that** the two edge regions are diametrically opposed and that the at least two alignments of the mounting plate are rotated through about 180° with respect to one another.

4. An optical glass fibre termination point as claimed in Claims 1 to 3, **characterised in that** the fastening means (10, 11) of the mounting plate (6) and of the housing (1) are formed at positions which define the corner points of a square.

5. An optical glass fibre termination point as claimed in Claims 1 to 4, **characterised in that** constructed on the mounting plate (6) there are preferably four expanding pegs (10), which may be inserted with a force fit into bores (11) in the housing (1).

6. An optical glass fibre termination point as claimed in Claims 1 to 5, **characterised in that** the outlet (8) for the hard wiring include clamping means (18) and recesses (19) in an edge web (20) for the passage of the optical glass fibres.

7. An optical glass fibre termination point as claimed in Claims 1 to 6, **characterised in that** the housing lid (2) includes an openable small lid (4), through which an edge region of the mounting plate (6) is accessible.

8. An optical glass fibre termination point as claimed in Claim 7, **characterised in that** in the vicinity of the small lid (4) the housing (1) includes outlet openings for optical glass fibre cables.

9. An optical glass fibre termination point as claimed in Claims 1 to 8, **characterised in that** the housing (1) has a rectangular shape and that outlet openings for optical glass fibre cables are situated on three sides.

## Revendications

1. Point de terminaison de fibres optiques présentant un boîtier rectangulaire (1) avec un couvercle refermable (4), dans lequel sont agencées une cassette de fibres de verre (7) pour l'épissure de fibres de verre introduites dans le boîtier (1) et une plaque de montage (6) pour la distribution de fibres de verre, dans lequel la cassette de fibres de verre (7) est fixée sur la plaque de montage (6) et dans lequel le boîtier (1) présente, sur au moins un côté, des ouvertures de sortie pour des câbles de fibres de verre,
dans lequel la plaque de montage (6) possède sensiblement une forme en plan carrée et présente, sur une zone de bord, une sortie (8) pour des câbles de fibres de verre pour le câblage fixe et sur une autre zone de bord, une sortie (9) pour le câblage par fiche avec des logements (17) pour des douilles (13) des fibres de verre et la plaque de montage (6) et le boîtier (1) présentent des moyens de fixation (10, 11) coopérants, avec lesquels la plaque de montage (6) peut être fixée dans au moins deux orientations tournées l'une vers l'autre dans le boîtier (1) de telle manière que la sortie (8) pour le câblage fixe ou la sortie (9) pour le câblage par fiche soit placée sur l'au moins un côté avec les ouvertures de sortie du boîtier (1).

2. Point de terminaison de fibres de verre selon la revendication 1,
**caractérisé en ce**
**que** les deux zones de bord se trouvent dans un angle d'environ 90° l'une par rapport à l'autre et
**que** les au moins deux orientations de la plaque de montage (6) sont tournées d'environ 90° l'une par rapport à l'autre.

3. Point de terminaison de fibres de verre selon la revendication 1,
**caractérisé en ce**
**que** les deux zones de bord sont diamétralement opposées et en ce que les au moins deux orientations de la plaque de montage sont tournées d'environ 180° l'une par rapport à l'autre.

4. Point de terminaison de fibres de verre selon les revendications 1 à 3,
**caractérisé en ce**
**que** les moyens de fixation (10, 11) de la plaque de montage (6) et du boîtier (1) sont réalisés à des endroits qui forment les points d'angle d'un carré.

5. Point de terminaison de fibres de verre selon les revendications 1 à 4,
**caractérisé en ce**
**que** quatre mandrins d'écartement (10) sont de préférence réalisés sur la plaque de montage (6), lesquels peuvent être enfichés dans des perçages (11) dans le boîtier (1) dans un siège de serrage.

6. Point de terminaison de fibres de verre selon les revendications 1 à 5,
**caractérisé en ce**
**que** la sortie (8) pour le câblage fixe présente des moyens de serrage (18) et des encoches (19) dans une nervure de bord (20) pour le passage des fibres de verre.

7. Point de terminaison de fibres de verre selon les revendications 1 à 6,
**caractérisé en ce**
**que** le couvercle de boîtier (2) présente un petit couvercle à ouvrir (4), par lequel une zone de bord de la plaque de montage (6) est accessible.

8. Point de terminaison de fibres de verre selon la revendication 7,
**caractérisé en ce**
**que** le boîtier (1) présente, dans la zone du petit couvercle (4), des ouvertures de sortie pour des câbles de fibres de verre.

9. Point de terminaison, de fibres de verre selon les revendications 1 à 8,
**caractérisé en ce**
**que** le boîtier (1) possède une forme rectangulaire et en ce que des ouvertures de sortie pour des câbles de fibres de verre se trouvent sur trois côtés.
